# EUROPEAN PATENT APPLICATION

(11) **EP 3 960 746 A1**
(43) Date of publication of application: **02.03.2022**
(21) Application number: 21194838.5
(22) Date of filing: 03.06.2020
(51) Int. Cl.: C07F 7/18

(54) **AN ENVIRONMENT-FRIENDLY GAS-SENSITIVE COATING FOR VOLATILE ACIDS AND THE PREPARATION METHOD THEREOF**

(30) Priority: 08.12.2019 CN 201911254671
(62) Divisional of application: 20178120.0
(71) Applicant: Shandong University, Jinan, Shandong 250199 (CN)
(72) Inventor: LU, Haifeng, Jinan, 250199 (CN); WU, Lianfeng, Jinan, 250199 (CN); WANG, Xianming, Jinan, 250199 (CN); FENG, Shengyu, Jinan, 250199 (CN)
(74) Representative: Proi World Intellectual Property GmbH

(57) **Abstract**

The invention relates to an environment-friendly air-sensitive coating for volatile acids and the preparation method thereof, which comprises components in parts by mass as follows: 50-100 parts of strong acid resistant resin, 1-30 parts of special color-changing agent A, 0.5-5 parts of auxiliary color-changing component, 0- 20 parts of fillers, 0-20 parts of auxiliaries and 0-300 parts of solvent. The said special color-changing agent A is a substance obtained by treating the white carbon black with the compound B. The invention is to realize the preparation of the gas-sensitive coating for volatile acids through enhancing the special color-changing agent A's color changing properties in the presence of acid gases with the auxiliary color-changing component and combined with its reasonable compatibility with the pigments, fillers and auxiliaries, etc. The invention has a variety of characteristics, such as obvious in color changing, quick in color changing, reversible in color changing and good compatibility, and is applicable to the surfaces of all units for manufacturing, storage, transportation and use of strong acids. It also has good market prospects in the manufacturing industries, such as petroleum alkylation, fluorine chemical industry, ore flotation, pulp and papermaking industry and semiconductor industry.

## Description

### Technical Field

The invention relates to the preparation of an environment-friendly gas-sensitive coating for volatile acids, and belongs to the field of comprehensive utilization of chemical products.

### Background Art

Strong acids, such as concentrated sulfuric acid, hydrofluoric acid, nitric acid and hydrochloric acid, have contributed a lot to the development of the national economy considering their widespread applications in petroleum alkylation, fluorine chemical industry, ore floatation, pulp and papermaking industry, semiconductor industry and other chemical industry production fields. Currently, the petrochemical industry uses mainly two alkylation processes, respectively hydrofluoric acid method and sulfuric acid method. Among them, the hydrofluoric acid method uses the hydrofluoric acid as a catalyst to have industrial isooctane (namely alkylate oil) synthesized from isobutane and butane. The alkylate oil prepared in this way is a mixture of heterogeneous alkanes with not only good anti-detonating quality and unleaded gasoline octane value up to above 94, but also ideal volatility and clean combustion performance, and thus is an ideal component for automotive gasoline. However, in the hydrofluoric acid alkylation process, the hydrofluoric acid is one of the most important materials. The hydrofluoric acid pipeline flange joints of the alkylation until are all potential leakage points, and will cause great harm in case of leakage. The highly corrosive hydrofluoric acid can be very destructive to the silicon-containing materials (glass and cement, etc.) and various metal equipment; additionally, the hydrofluoric acid is highly volatile, with minimal taste and colorless when exposed in the air; its exposure is difficult to be observed, but can cause serious and incurable damages to people and animals and even endanger their lives. Therefore, it is of great importance to detect the hydrofluoric acid leakage as early as impossible so as to minimize the damages caused thereby.

The hydrofluoric acid color-changing warning coating is a special purpose coating that can be used to detect the leakage of hydrofluoric acid/hydrogen fluoride vapor, and also a gas-sensitive coating against volatile acids. It acts as a preservative under normal circumstances when applied to the hydrofluoric acid pipeline flanges or valves, but shows significant and long-lasting color changes within a short time in case of leakage of the hydrofluoric acid, so that the operators can be warned to deal with the leaking points timely and avoid major safety accidents.

Similar to hydrofluoric acid, the other industrial acids, such as hydrochloric acid, nitric acid and glacial acetic acid, also have serious problems in use, including volatile, easy to leak, colorless, and hazardous. Therefore, it is urgent to develop a gas-sensitive coating for such volatile acids. As solvent based coatings release volatile organic compounds in the coating process and pollute the air, the development of environment-friendly solvent-free gas-sensitive coatings is more in line with the needs of social development.

Chinese Patent Document CN106905833A (Application number: 201710218911.5) has disclosed an environment-friendly chromotropic interior wall coating and the preparation method thereof. The paint comprises the following components: polyurethane resin material, ethanol, antishrinking agent, and triphenylmethane dyes or fluorane dyes. The coating can effectively warn the superacid or superbasic environment which is harmful to human health, so that people can keep the air circulation of the working environment in time, and take active protective measurements. However, the polyurethane resin used by the coating is not resistant to strong acids, and the coating will decompose and fall off when encountering leakage of strong acids, so this coating cannot well protect the equipment.

Chinese Patent Document CN108530053A (Application number: 201810279464.9) has disclosed a pH-sensitive allochroic inorganic material and the preparation method thereof. By mixing the prepared allochroic powder with other resin solutions or emulsion, a pH-sensitive allochroic paint or film material can be obtained. However, the pH-sensitive allochroic inorganic material prepared in the invention needs complicated preparation processes and high energy consumption.

Although researches on acid warning coatings have stared earlier overseas, only a few companies have developed such coatings successfully and applied them widely in petrochemical units, fluorine chemical industry and semiconductor industry. Considering the difficulty of development, there are few researches on acid warning coatings in China. China once developed a "hydrogen fluoride indicating paint" in the 1990s, but compared to foreign products, it still had a lot of problems, including non-obvious color change, long color-changing time, irreversible color changing (single use only) and the like. Therefore, it failed to be widely used. Currently, China's use of the acid warning coatings relies basically on imports, so there are problems such as high price and long supply cycle. Furthermore, the existing foreign products are all solvent-based coatings and need to be diluted with solvents, so they are not environment-friendly and cannot achieve environmental protection coating.

To sum up, there is an urgent need for an environment-friendly gas-sensitive acid color-changing coating, especially a gas-sensitive coating for the volatile acids, such as hydrofluoric acid, hydrochloric acid, nitric acid and glacial acetic acid, in the industry.

### Description of the Invention

In view of the shortcomings of the existing technologies of acid warning coatings at home and abroad, the invention discloses a gas-sensitive coating for the volatile acids, such as hydrofluoric acid, hydrochloric acid, nitric acid and glacial acetic acid. This coating is simple in formulation, easy in preparation and convenient for industrial production. It is quick, obvious and reversible in color changing, and can be used together with epoxy, acrylic, polyurethane and other coatings. Therefore, it can be widely used in petrochemical units to detect the leakage of hydrofluoric acid and other volatile acids at the pipeline flange joints and storage tank seals, etc. to play the role of timely warning.

### Summary of the Invention

The environment-friendly gas-sensitive coating for volatile acids provided in the invention takes the two-component solvent-free strong acid-resistant resin as the film forming matter and is to be mixed with special color-changing agent, auxiliary color-changing component filler and auxiliaries, etc. to form a coating mixture during use. The coating mixture is quick, obvious and reversible in color changing after being coated, playing a quick warning role, and can be used repeatedly. The coating can also be used together with epoxy, acrylic acid, polyurethane and most other coatings to achieve extensive applications.

### Detailed Description of the Invention

The technical solution of the invention is as follows:
An environment-friendly gas-sensitive coating for volatile acids comprises the components in parts by mass as follows:
50 to 100 parts of strong acid resistant resin, 1 to 30 parts of special color-changing agent A, 0.5 to 5 parts of auxiliary color-changing component, 0 to 20 parts of fillers, 0 to 20 parts of auxiliaries and 0 to 300 parts of solvent;
The said special color-changing agent A is a substance obtained by treating the white carbon black with the compound B;
The said compound B has the structural characteristics as follows: 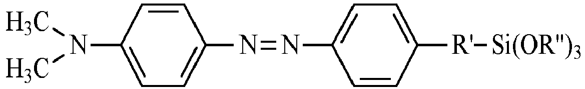 Where: R' is a variety of bridging organic groups that can connect benzene rings to silicon atoms; and is further preferred to be alkylidene groups, more preferred to be C1-C8 alkylidene groups and most preferred to be methylene, ethylidene or propylidene groups.

R" is a variety of organic groups that can be separated in the form of HOR" structure; and is further preferred to be alkyl or aromatic groups, more preferred to be C1-C8 alkyl or phenyl groups, and most preferred to be methyl, ethyl, isopropyl, tert-butyl, or phenyl groups.

According to a preferred embodiment of the invention, the said strong acid resistant resin includes a variety of strong acid-resistant two-component solvent-free resins; and is further preferred to be solvent-free epoxy resin, solvent-free phenolic epoxy resin, solvent-free polyurethane resin and solvent-free polyurea resin, and more preferred to be solvent-free polyurethane resin.

According to an embodiment of the invention, the said white carbon black is a variety of commercially available white carbon black products, including the various precipitated white carbon black and fumed white carbon black, and is preferred to be precipitated white carbon black.

According to a preferred embodiment of the invention, the said compound B is prepared as follows:
A compound that contains the left-side structure of the compound B's R' group is activated through a chemical modification process; and then, the activated compound reacts with silane to obtain the compound B.

According to a preferred embodiment of the invention, the said compound that contains the left-side structure of the compound B's R' group is methyl orange or a methyl orange derivative.

According to a preferred embodiment of the invention, the said chemical modification process includes but is not limited to acylating chlorination, epoxy functionalization, hydroxyl functionalization, carboxyl functionalization and other common chemical modification reactions.

According to a preferred embodiment of the invention, the said silane includes but is not limited to the various commercially available silane coupling agents and small molecule silane compounds, including aminopropyl trimethoxy silane, aminopropyl triethoxy silane, chloropropyl triethoxy silane, chloropropyl trimethoxy silane, trimethyl chlorosilane, dimethyl dichloro-silane, methyl trichlorosilane, tetrachlorosilane and dimethyl mono-hydrogen chlorosilane.

According to the invention, the preparation process, which is not directly described above, but can obtain the special color-changing agent A from the commercially available products, is also within the scope of the invention.

According to a preferred embodiment of the invention, the process of treating the white carbon black with the compound B is as follows:
Mix the compound B, the white carbon back and the solvent evenly and heat the mixture up for solvent refluxing; hold the reaction for 2-4 hours until the refluxing stops; then, reduce the pressure and remove the solvent through distillation to obtain the special color-changing agent A.

The said white carbon black includes a variety of fumed white carbon black and precipitated white carbon black; and is preferred to be precipitated white carbon black;

The said solvent includes the various commercially available organic solvents capable of dissolving compound B without reacting with compound B and white carbon black; and is preferred to be methylbenzene, tetrahydrofuran and acetone, and further preferred to be methylbenzene.

According to a preferred embodiment of the invention, the said auxiliary color-changing component includes the various components that can improve the color brightness of the coating and assist in the color changing display of the special color-changing agent A, including a variety of organic dyes and inorganic dyes; and is further preferred to be modified polyaniline, medium chrome yellow, permanent yellow, fast yellow, zinc yellow, lemon yellow, iron oxide brown or iron oxide yellow, and more preferred to be a mixture of medium chromium yellow and permanent yellow.

According to a preferred embodiment of the invention, the said fillers are a variety of fillers that are used to improve the mechanical properties and other basic properties of the coating, including titanium dioxide, mica powder, aluminium hydroxide, magnesium hydroxide, silica powder, white carbon black, talcum powder, nano calcium carbonate or barium sulfate; and is further preferred to be the mixture of titanium dioxide, mica powder and aluminium hydroxide.

According to a preferred embodiment of the invention, the said auxiliaries are a variety of reagents that can improve the performance of the coating, including flatting agent, de-foaming agent, dispersing agent and anti-settling agent.

According to a preferred embodiment of the invention, the mass ratio of the strong acid resistant resin, special color-changing agent A, auxiliary color-changing component, fillers and auxiliaries is 100: 1-30: 0.5-5: 0-20: 0-40; and is preferred to be 100: 5-20: 10-20: 15-30: 1-5.

According to a preferred embodiment of the invention, the said environment-friendly gas-sensitive coating for volatile acids also includes 25 parts of curing agent; according to a further preferred embodiment of the invention, the said curing agent is isocyanate curing agent or polyamide resin.

According to an embodiment of the invention, the preparation method of the said environment-friendly gas-sensitive coating for volatile acids comprises the steps as follows:
The strong acid resistant resin, special color-changing agent A, auxiliary color-changing component, fillers, auxiliaries and solvent are mixed according to the proportions by weight and stirred evenly for full dispersion; then, the mixture is ground to a particle size of less than 40 microns to obtain the component A of the coating.

According to a preferred embodiment of the invention, the curing agent is to be used as component B for the coating; the component A and component B of the coating are mixed according to the mass ratio of 4∼5: 1 for curing to obtain the environment-friendly gas-sensitive coating for volatile acids.

Steps not specified in details in the invention shall be according to the existing technologies.

The principle and beneficial effects of the invention are as follows:
The gas-sensitive warning coating can react with acidic gases in case of any leakage, serving as a timely warning and alarm through color changing.

The invention is to realize the preparation of the gas-sensitive coating for volatile acids through enhancing the special color-changing agent A's color changing properties in the presence of acid gases with the auxiliary color-changing component and combined with its reasonable compatibility with the pigments, fillers and auxiliaries, etc.

The said special color-changing agent A in the invention can show color changing through interactions with strong acid gases. Generally, the commercially available acid-base indicators can show color changing in the presence of acids, but they are mostly small molecules of organic weak acids and bases and may cause a lot of serious problems after being processed into coatings, such as loss in the presence of water, color fading and even degradation and peeling of coatings. The special color-changing agent A prepared in the invention has fixed the color-changing groups onto the surface of white carbon black through chemical reactions, and thus can ensure that the subsequent materials prepared will not be dissolved into water, resulting in loss (namely no color fading), after repeated washing. Therefore, it is better than the commercially available acid-base indicators.

The said special color-changing agent A in the invention is light in color under normal conditions, but turns dark red after encountering strong acids. To improve the color warning effects of the color-changing agent A, the invention chooses to use the mixture of modified polyaniline, medium chromium yellow and permanent yellow to adjust the color of the coating before being exposed to acids to bright yellow. This can realize a sharp contrast effect of color, with the coating in bright yellow and dark red respectively before and after being exposed to acids. Such color changing effects of the special color-changing agent A can also be realized through use of a pigment of another color, but from the practical factory applications, the mixture of modified polyaniline, medium chromium yellow and permanent yellow can achieve the best results.

The said fillers in the invention can improve the mechanical properties and other basic properties of the coating. For example, the mica powder can enhance and improve the hardness of the coating; aluminum hydroxide can strengthen and improve the flame retardance of the coating; titanium dioxide can enhance and improve the weather resistance of the coating; and white carbon black can strengthen and improve the hydrophobicity of the coating surface. Specific fillers are to be selected depending on the different application requirements of the coating. From the current factory application conditions, the filler is preferred to be the mixture of titanium dioxide, mica powder and aluminium hydroxide.

The said auxiliaries in the invention are a variety of auxiliaries that can improve the performance of the coating. For example, the flatting agent can facilitate the coating to form a flat film on the equipment surface; and the defoaming agent can eliminate the foaming of the coating during construction to improve coating density and reduce defects.

The beneficial effects of the invention are as follows:
The invention prepares an environment-friendly acid warning coating for volatile acids, which is quick, obvious, and reversible in color changing. It takes a strong acid resistant resin as the matrix resin and has the gas-sensitive coating prepared by adding special color-changing agent, auxiliary color-changing component, fillers and auxiliaries into the resin. The coating prepared in the invention has the following characteristics:
1. Obvious in color changing- from yellow to red after being exposed to acids
2. Quick in color changing- color changing time less than 1s
3. Reversible in color changing- can be recovered by water washing after color changing for repeated use
4. Good compatibility.

The coating developed in the invention suits all acids or acidic gases with pH < 3, including hydrofluoric acid (liquid or steam), sulfuric acid, fluosilicic acid, hydrochloric acid, nitric acid, chlorine, hydrobromic acid, trifluoroacetic acid, perchloric acid, glacial acetic acid and other acids or acid vapors.

It is also applicable to the surfaces of all units for manufacturing, storage, transportation and use of strong acids.

It has good market prospects in the manufacturing industries, such as petroleum alkylation, fluorine chemical industry, ore flotation, pulp and papermaking industry and semiconductor industry.

### Brief Description of the Figures

Figure 1 is the infrared spectrogram of the compound B 1 prepared in Embodiment 1.
Figure 2 is the infrared spectrogram of the special color-changing agent A1 prepared in Embodiment 1.
Figure 3 is the color changing diagram of the test film in hydrofluoric acid solution in Experimental case 1.
Figure 4 is the color changing diagram of the test film in nitric acid, hydrochloric acid, glacial acetic acid and formic acid in Experimental case 1.
Figure 5 is the color changing diagram of the test film that has removed the hydrofluoric acid on its surface by soaking in water after color changing in Experimental case 3.
Figure 6 is the performance comparison diagram of the invention and the foreign products in Experimental case 4.

### Detailed embodiments

The invention is further described as follows in combination with the specific embodiments, but is not limited to that.

The raw materials used in the embodiments are all conventional raw materials available on the market or can be prepared according to the methods in the references.

The said molecular weights in the embodiments are all number-average molecular weights. The said proportions in the embodiments are expressed as parts by weight.

The BYK410 and BYK180 used in the embodiments are anti-settling agents that can maintain the uniform dispersion of the various inorganic fillers in the coating system, and prevent them from settling and forming hard blocks incapable of being stirred up. They are both commercially available.

### Embodiment 1

Add 20g methyl orange to 100mL anhydrous tetrahydrofuran solution in the argon protection environment; then, add 20mL benzenedicarbonyl chloride drop by drop and stir the mixture for reaction under room temperature for 2 hours. After removing the solvent through distillation, add 100mL anhydrous tetrahydrofuran solution again to the reaction system, and then, add excessive aminopropyl triethoxy silane and stir the mixture for 3 hours under room temperature. Remove the solvent through distillation first, and then remove the unreacted aminopropyl triethoxy silane through distillation under a reduced pressure to obtain a functionalized methyl orange compound with siloxy groups. This compound is to be used as compound B1. The reaction route is as follows:

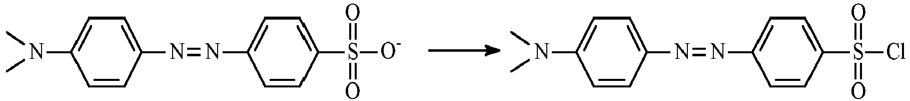

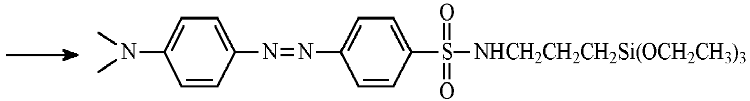

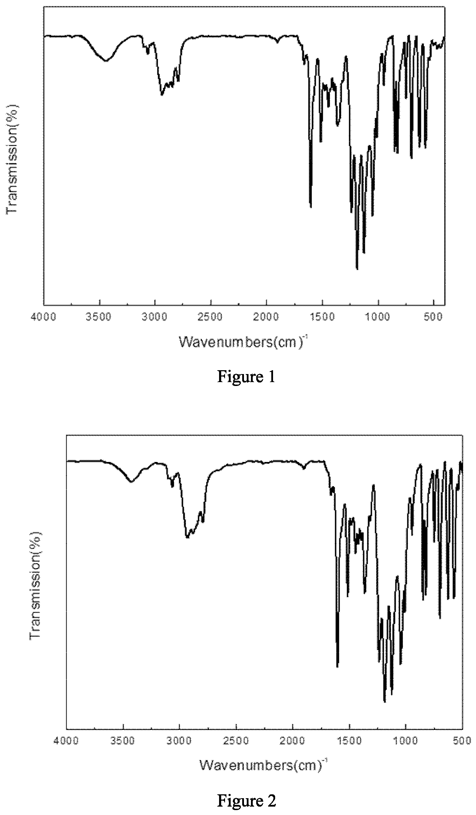

IR characterization and analysis of the compound B1 is as shown in Figure 1.

Mix 10g compound B1, 50g precipitated white carbon black and 200mL methylbenzene evenly, and heat the mixture up to achieve methylbenzene refluxing for 2 hours. Stop the refluxing, and remove the methylbenzene through distillation to obtain the special color-changing agent A1.

IR analysis spectrogram of the special color-changing agent A1 is as shown in Figure 2.

### Embodiment 2

Weigh 60 parts of E51 epoxy resin, 6 parts of titanium dioxide, 16 parts of mica powder, 5 parts of aluminum hydroxide, 3 parts of modified polyaniline, 15 parts of color-changing agent A1, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a three-roller mill; discharge and pack the mixture to obtain component A of the gas-sensitive coating. Take 40 parts of 300# polyamide curing agent as component B of the coating, and mix the component A and the component B according to a mass ratio of 5: 1 for curing to obtain the gas-sensitive coating.

### Embodiment 3

Weigh 80 parts of solvent-free novolac epoxy resin, 9 parts of titanium dioxide, 10 parts of mica powder, 10 parts of aluminum hydroxide, 3 parts of modified polyaniline, 15 parts of color-changing agent A1, 5 parts of medium chrome yellow, 5 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 20 parts of solvent-free modified aromatic amine curing agent as component B of the coating, and mix the component A and the component B according to a mass ratio of 5: 1 for curing to obtain the gas-sensitive coating.

### Embodiment 4

Weigh 80 parts of hydroxy acrylic resin, 6 parts of titanium dioxide, 20 parts of mica powder, 15 parts of aluminum hydroxide, 3 parts of modified polyaniline, 15 parts of color-changing agent A1, 5 parts of medium chrome yellow, 5 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 20 parts of isocyanate prepolymer N3300 as component B of the coating, and mix the component A and the component B according to a mass ratio of 4: 1 for curing to obtain the gas-sensitive coating.

### Embodiment 5

Weigh 82.5 parts of hydroxy acrylic resin, 6 parts of titanium dioxide, 16 parts of mica powder, 15 parts of aluminum hydroxide, 3 parts of modified polyaniline, 15 parts of color-changing agent A1, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 18.5 parts of isocyanate prepolymer N3300 curing agent as component B of the coating, and mix the component A and the component B according to a mass ratio of 4: 1 for curing to obtain the gas-sensitive coating.

### Embodiment 6

Weigh 70 parts of hydroxyl polyester resin, 6 parts of titanium dioxide, 16 parts of mica powder, 5 parts of aluminum hydroxide, 3 parts of modified polyaniline, 15 parts of color-changing agent A2, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 30 parts of isocyanate prepolymer N3390 curing agent as component B of the coating, and mix the component A and the component B according to a mass ratio of 3: 1 for curing to obtain the gas-sensitive coating.

### Embodiment 7

Weigh 80 parts of hydroxyl polyester resin, 6 parts of titanium dioxide, 16 parts of mica powder, 5 parts of aluminum hydroxide, 3 parts of modified polyaniline, 15 parts of color-changing agent A2, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 20 parts of isocyanate prepolymer N3390 curing agent as component B of the coating, and mix the component A and the component B according to a mass ratio of 3: 1 for curing to obtain the gas-sensitive coating.

### Embodiment 8

Weigh 85 parts of hydroxy acrylic resin, 6 parts of titanium dioxide, 16 parts of mica powder, 5 parts of aluminum hydroxide, 3 parts of modified polyaniline, 15 parts of color-changing agent A2, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 15 parts of isocyanate prepolymer N3300 curing agent as component B of the coating, and mix the component A and the component B according to a mass ratio of 3: 1 for curing to obtain the gas-sensitive coating.

### Embodiment 9

Weigh 75 parts of asparaginic acid resin, 6 parts of titanium dioxide, 16 parts of mica powder, 5 parts of aluminum hydroxide, 3 parts of modified polyaniline, 15 parts of color-changing agent A3, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 25 parts of isocyanate prepolymer N3390 curing agent as component B of the coating, and mix the component A and the component B according to a mass ratio of 4: 1 for curing to obtain the gas-sensitive coating.

### Embodiment 10

Weigh 40 parts of hydroxyl polyester resin, 40 parts of hydroxy acrylic resin, 6 parts of titanium dioxide, 16 parts of mica powder, 5 parts of aluminum hydroxide, 3 parts of modified polyaniline, 15 parts of color-changing agent A3, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 20 parts of isocyanate prepolymer N3300 curing agent as component B of the coating, and mix the component A and the component B according to a mass ratio of 4: 1 for curing to obtain the gas-sensitive coating.

### Embodiment 11

Weigh 50 parts of hydroxy acrylic resin, 30 parts of hydroxyl polyester resin, 6 parts of titanium dioxide, 16 parts of mica powder, 5 parts of aluminum hydroxide, 3 parts of modified polyaniline, 15 parts of color-changing agent A3, 10 parts of medium chrome yellow, 8 parts of permanent yellow, 1 part of BYK410 and 1 part of BYK180 for initial mixing; stir and disperse the mixture for 30 minutes with a high-speed dispersion machine and grind the coating to a particle size of less than 40 microns with a basket mill; discharge and pack the mixture to obtain component A of the coating. Take 20 parts of isocyanate prepolymer N3300 curing agent as component B of the coating, and mix the component A and the component B according to a mass ratio of 4: 1 for curing to obtain the gas-sensitive coating.

### Experimental case 1

Apply the coating onto a polytetrafluoroethylene sheet through brushing or spraying, and cure it at room temperature for 7 days to form a film with a thickness of 1.5±0.5mm. Test the tensile strength of the coatings in the above embodiments. The results are as shown in Table 1.

**Table 1**

| S/N | Tensile strength of coating film (MPa) | Elongation at break (%) |
|---|---|---|
| Embodiment 2 | 18.5 | 3 |
| Embodiment 3 | 19.7 | 5 |
| Embodiment 4 | 14.0 | 18 |
| Embodiment 5 | 17.0 | 22 |
| Embodiment 6 | 23.1 | 26 |
| Embodiment 7 | 26.6 | 35 |
| Embodiment 8 | 27.2 | 10 |
| Embodiment 9 | 28.0 | 30 |
| Embodiment 10 | 22.2 | 16 |
| Embodiment 11 | 18.0 | 31 |

As can be seen from Table 1, after the addition of color-changing agent A, the tensile strength and elongation at break of the coatings are both improved, indicating that the color-changing agent A has no harmful effects on the properties of the coatings, such as the tensile strength and elongation at break, and conforms to the requirements of use.

### Experimental case 2

Test the color changing properties of the coatings from the above embodiments in the presence of hydrofluoric acid. The color changing time and color changing situations of the coatings in different embodiments are as shown in Table 2.

**Table 2**

| S/N | Color changing time | Color-changing degree |
|---|---|---|
| Embodiment 2 | 6s | From yellow to red |
| Embodiment 3 | 5s | From yellow to red |
| Embodiment 4 | 2s | From yellow to dark red |
| Embodiment 5 | 5s | From yellow to light red |
| Embodiment 6 | 8s | From yellow to red |
| Embodiment 7 | 5s | From yellow to red |
| Embodiment 8 | 2s | From yellow to red |
| Embodiment 9 | 1s | From yellow to light red |

As can be seen from Table 2, the acid color-changing warning coatings in the invention can show color changing in as fast as 1s after being exposed to acids. Additionally, its color changing before and after exposure to acids, from yellow to red, is very obvious, and can serve as a good warning.

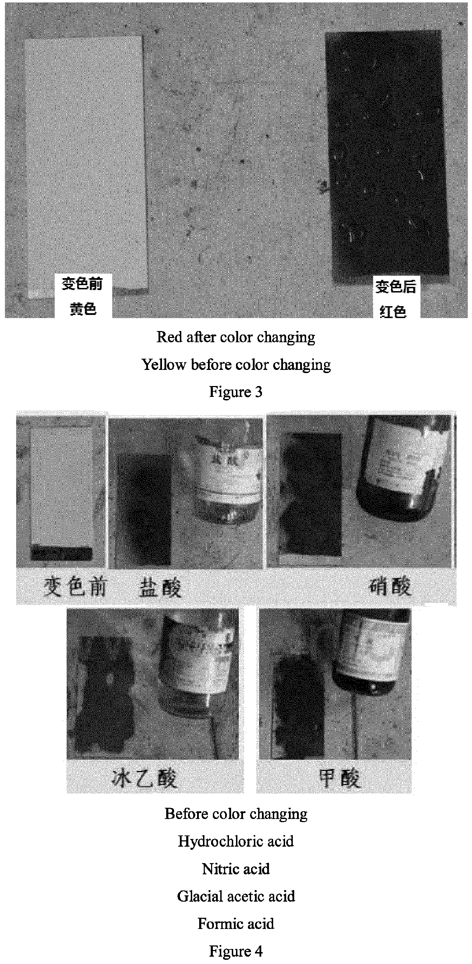

After soaking the resin tensile strength test film in hydrofluoric acid solution, the observed color changes are as shown in Figure 3. As can be seen from Figure 3, the test film shows an obvious color changing from yellow to red.

Color changes of the test films in nitric acid, hydrochloric acid, glacial acetic acid and formic acid are as shown in Figure 4. As can be seen from Figure 4, the test films show obvious color changing from yellow to red in all the above acids.

### Experimental case 3

To test the reversible color changing performance of the coatings in the above embodiments, remove the hydrofluoric acid on the surface of the coatings after color changing through water soaking or other means, and observe the color changes. The results are as shown in Figure 4.

As can be seen from Figure 4, after removing the hydrofluoric acid on the surface of the coatings after color changing through water soaking or other means, the coatings turns from red to yellow. Upon experimental verification, the coatings that have reverted to yellow can turn red again after being exposed to the hydrofluoric acid, indicating that the coatings are reversible in color changing. Upon verification, the coating can be used repeatedly for more than 10 times. The coatings in the invention are well reversible in color changing.

### Experimental case 4

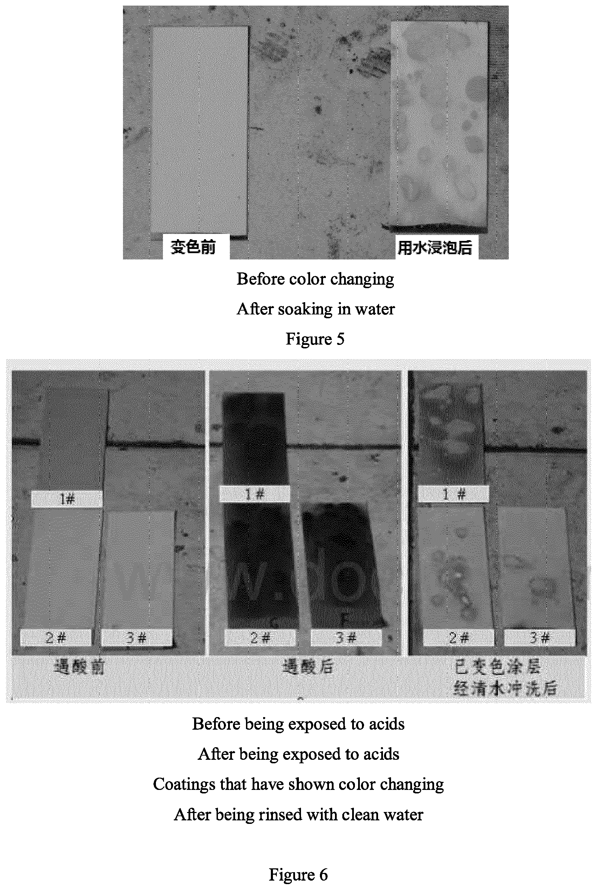

After testing the properties of the coatings in the invention, and those of the commercially available foreign products and domestic products, the following results are observed, as shown in Table 3 and Figure 5. In Figure 5, 1# shows a hydrofluoric acid liquid color-changing warning coating from abroad, while 2# and 3# show two hydrofluoric acid liquid color-changing warning coatings from the invention.

**Table 3**

| Indicator | Foreign products | Products in the invention | Other domestic products |
|---|---|---|---|
| Color-changin g degree | Yellow →Red | Yellow →Red | Orange yellow →Yellow |
| Color-changin g time | <1s | <1s | >1h |
| Whether reversible | Yes | Yes | No |

As can be seen from Table 3 and Figure 5, the gas-sensitive coating in the invention are superior to the similar domestic products. They are comparable to the foreign products in color changing, color-changing time and reversibility, but are deeper and more obvious in color changing than the foreign products. Additionally, the products of the invention are cheaper than the foreign products in preparation costs. For example, the foreign products are priced at about 600-1000 yuan/kg, while the cost of the products in the invention is 150-200yuan/kg around. Therefore, the present invention has provided a kind of high-performance and low-cost acid color-changing gas-sensitive coating, which has shortened the production cycle and broken up the foreign technology monopolies.

## Claims

1. A kind of compound B, **characterized in that** the compound B has the following structural characteristics: 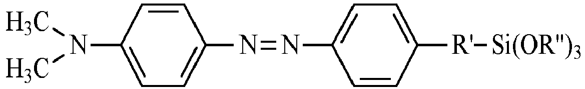
Where: R' is a variety of bridging organic groups that can connect benzene rings to silicon atoms;
R" is a variety of organic groups that can be separated in the form of HOR" structure.

2. The said compound B according to Claim 1, **characterized in that** the R' in the structure of the compound B is alkylidene group and R" is alkyl or aromatic group.

3. The preparation method of the said compound B according to Claim 1 comprises the following steps:
A compound that contains the left-side structure of the compound B's R' group is activated through a chemical modification process; and then, the activated compound reacts with silane to obtain the compound B.

4. The said preparation method of the compound B according to Claim 3, **characterized in that** the said compound that contains the left-side structure of the compound B's R' group is methyl orange or a methyl orange derivative.

5. The said preparation method of the compound B according to Claim 3, **characterized in that** the said chemical modification process is acylating chlorination, epoxy functionalization, hydroxyl functionalization or carboxyl functionalization reactions.

6. The said preparation method of the compound B according to Claim 3, **characterized in that** the said silane is aminopropyl trimethoxy silane, aminopropyl triethoxy silane, chloropropyl triethoxy silane, chloropropyl trimethoxy silane, trimethyl chlorosilane, dimethyl dichloro-silane, methyl trichlorosilane, tetrachlorosilane or dimethyl mono-hydrogen chlorosilane.
